# EUROPÄISCHE PATENTANMELDUNG

(11) **EP 1 647 448 A2**
(43) Veröffentlichungstag der Anmeldung: **19.04.2006**
(21) Anmeldenummer: 05107973.9
(22) Anmeldetag: 31.08.2005
(51) Int. Cl.: B60R 1/00

(54) **Verfahren und Vorrichtung zur Verbesserung der Sicht von Fahrern von Kraftfahrzeugen**

(30) Priorität: 13.10.2004 DE 102004049870
(71) Anmelder: ROBERT BOSCH GMBH, 70442 Stuttgart (DE)
(72) Erfinder: Nordbruch, Stefan, 70469 Stuttgart (DE)

(57) **Zusammenfassung**

Die Erfindung betrifft ein Verfahren und eine Vorrichtung zur Verbesserung der Sicht von Fahrern von Kraftfahrzeugen, die mit Empfangseinrichtungen und Wiedergabeeinrichtungen für Bilddaten versehen sind, wobei die von jeweils einem vorausfahrenden anderen Fahrzeug, das mit mindestens einer in Fahrtrichtung ausgerichteten Videokamera und einer Sendeeinrichtung für die von der mindestens einen Videokamera erzeugten Bilddaten ausgerüstet ist, von der Empfangseinrichtung und Wiedergabeeinrichtung empfangen und wiedergegeben werden.

## Beschreibung

### Stand der Technik

Die Erfindung betrifft ein Verfahren und eine Vorrichtung zur Verbesserung der Sicht von Fahrern von Kraftfahrzeugen.

Mit Hilfe von Videokameras, die an Lastkraftwagen mit Blickrichtung nach vom angeordnet sind und deren Bildsignale auf einem Bildschirm am Heck des Lastkraftwagens wiedergegeben werden, soll die Sicht aus nachfolgenden Fahrzeugen verbessert werden. Solche Vorrichtungen sind beispielsweise durch FR 2827823 A1 und DE 200 20 245 U1 bekannt geworden. Diese haben jedoch den Nachteil, dass gerade die Fahrzeuge, bei denen die Sichtverbesserung nicht allzu notwendig ist, durch einen erheblichen Aufwand (großer Bildschirm) verteuert werden. Ferner ist das Bild des am Heck angebrachten Bildschirms durch verschiedene Störungen, beispielsweise durch direkte Sonneneinstrahlung beeinträchtigt, so dass eine Erkennbarkeit für den Fahrer eines nachfolgenden Fahrzeugs mindestens erschwert ist.

Es ist ferner durch DE 199 14 906 A1 ein Kommunikationssystem bekannt geworden, bei dem die Fahrzeuge mit nach vom gerichteten Videokameras ausgerüstet sind, die jedoch als Sensoren zur Vermessung des relativen Abstandes und der relativen Position zum vorausfahrenden Fahrzeug dienen. Gesendet werden dann Positionsdaten, die von Einrichtungen anderer Fahrzeuge ausgewertet werden.

Aufgabe der vorliegenden Erfindung ist es, die Sicht des Fahrers zu verbessern, ohne dass großformatige Bildschirme an Fahrzeugrückseiten angebracht werden müssen.

### Vorteile der Erfindung

Diese Aufgabe wird bei dem erfindungsgemäßen Verfahren dadurch gelöst, dass die Kraftfahrzeuge mit Empfangseinrichtungen und Wiedergabeeinrichtungen für Bilddaten versehen sind, wobei die von jeweils einem vorausfahrenden anderen Fahrzeug, das mit mindestens einer in Fahrtrichtung ausgerichteten Videokamera und einer Sendeeinrichtung für die von der mindestens einen Videokamera erzeugten Bilddaten ausgerüstet ist, von der Empfangseinrichtung und Wiedergabeeinrichtung empfangen und wiedergegeben werden.

Das erfindungsgemäße Verfahren hat den Vorteil, dass der Fahrer die Fahrbahn und die Verkehrssituation vor einem vorausfahrenden Fahrzeug durch Blick auf einen relativ kleinen optisch günstig im Fahrzeug angeordneten Bildschirm verbessern kann. Die Bilddaten eines vorausfahrenden Fahrzeugs können gegebenenfalls auch von mehreren in einer vorgegebenen Entfernung nachfolgenden Fahrzeugen empfangen werden.

Grundsätzlich kann auch mit rein funktechnischen Mitteln, wie kleiner Sendeleistung und Richtantennen dafür Sorge getragen werden, dass im nachfolgenden Fahrzeug nur das Bild empfangen wird, das in einem vorausfahrenden Fahrzeug aufgenommen wird. Es ist jedoch gemäß einer Weiterbildung vorgesehen, dass von den Bilddaten, die mit einer Empfangseinrichtung empfangbar sind, diejenigen selektiert werden, die von einem innerhalb einer vorgegebenen Entfernung vorausfahrenden Fahrzeug gesendet werden.

Diese Weiterbildung kann vorzugsweise derart ausgestaltet sein, dass Fahrzeuge, welche Bilddaten aussenden, zusätzlich zu Bilddaten Selektionsdaten senden, die Informationen über die Position und die Fahrtrichtung und eine Identifikation enthalten, dass in der Empfangseinrichtung die empfangenen Informationen über die Position und Fahrtrichtung mit der eigenen Position und Fahrtrichtung verglichen werden und dass diejenigen Bildsignale empfangen werden, deren Daten bezüglich Position und Fahrtrichtung auf ein vorausfahrendes Fahrzeug hinweisen.

Bei einer ersten Ausgestaltung dieser Weiterbildung ist vorgesehen, dass die anderen Fahrzeuge laufend Selektionsdaten und Bilddaten senden. Eine zweite Ausgestaltung besteht darin, dass Fahrzeuge laufend Anfragen nach Selektionsdaten senden, dass die auf Anfrage empfangenen Selektionsdaten bezüglich Position und Fahrtrichtung mit den Daten des jeweils eigenen Fahrzeugs verglichen werden und dass dasjenige Fahrzeug zum Senden der Bilddaten aufgefordert wird, für welches die empfangenen Selektionsdaten bezüglich der Position und der Fahrtrichtung auf ein vorausfahrendes Fahrzeug hinweisen.

Um eine sichere Zuordnung der Bilddaten zu den Selektionsdaten zu gewährleisten kann ferner vorgesehen sein, dass die Bilddaten ferner die jeweilige Identifikation enthalten.

Die Erfindung betrifft ferner eine Vorrichtung zur Verbesserung der Sicht von Fahrern von Kraftfahrzeugen, wobei die Fahrzeuge mit Empfangseinrichtungen und Wiedergabeeinrichtungen versehen sind, welche Selektionsmittel aufweisen, die empfangene Signale derart selektieren, dass die von jeweils einem vorausfahrenden anderen Fahrzeug, das mit mindestens einer in Fahrtrichtung ausgerichteten Videokamera und einer Sendeeinrichtung für die von der mindestens einen Videokamera erzeugten Bilddaten ausgerüstet ist, von der Empfangseinrichtung und Wiedergabeeinrichtung empfangen und wiedergegeben werden.

Diese Vorrichtung ist vorzugsweise derart ausgebildet, dass die Selektionsmittel ferner derart selektieren, dass von den Bilddaten, die mit einer Empfangseinrichtung empfangbar sind, diejenigen selektiert werden, die von einem innerhalb einer vorgegebenen Entfernung vorausfahrenden Fahrzeug gesendet werden.

Eine erste Ausgestaltung dieser Vorrichtung besteht darin, dass in den Selektionsmitteln die empfangenen Informationen über die Position und Fahrtrichtung mit der eigenen Position und Fahrtrichtung verglichen werden und dass diejenigen Bildsignale empfangen werden, deren Daten bezüglich Position und Fahrtrichtung auf ein vorausfahrendes Fahrzeug hinweisen.

Bei einer zweiten Ausgestaltung ist vorgesehen, dass Fahrzeuge, welche Bilddaten senden, mit einer Einrichtung zum Senden von Selektionsdaten ausgerüstet sind, welche Informationen über die Position und die Fahrtrichtung und eine Identifikation enthalten.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung zweier mit erfindungsgemäßen Vorrichtungen ausgerüsteten Fahrzeuge,
Fig. 2 ein Blockschaltbild einer ersten Vorrichtung in einem Fahrzeug,
Fig. 3 ein Blockschaltbild einer zweiten Vorrichtung in einem Fahrzeug,
Fig. 4 ein Blockschaltbild einer Vorrichtung in einem Fahrzeug, die sowohl zum Senden als auch zum Empfangen eingerichtet ist,
Fig. 5 ein Flussdiagramm zur Erläuterung eines ersten Ausführungsbeispiels des erfindungsgemäßen Verfahrens und
Fig. 6 ein Flussdiagramm eines zweiten Ausführungsbeispiels.

### Beschreibung der Ausführungsbeispiele

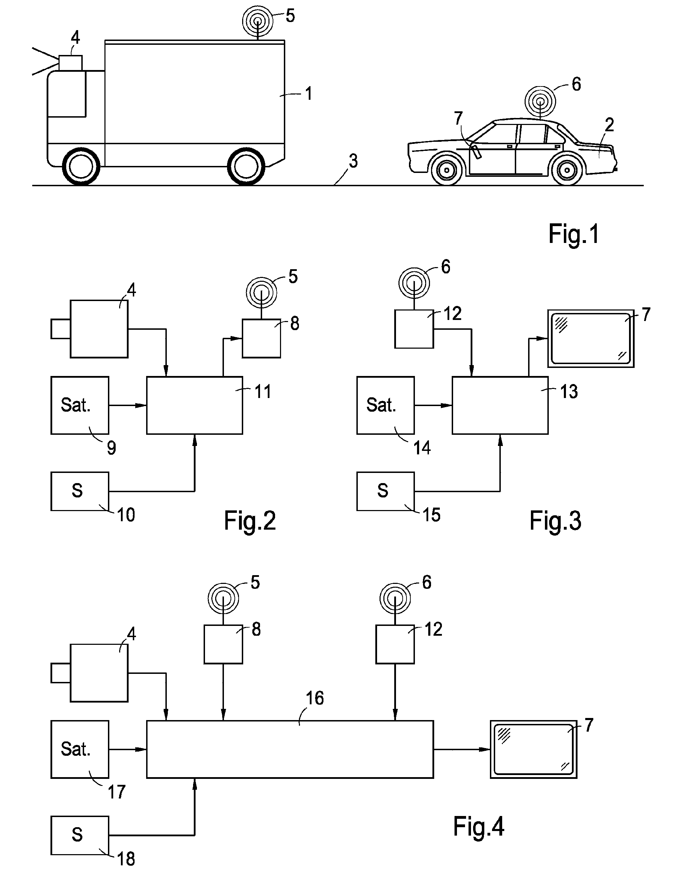

Fig. 1 zeigt ein Fahrzeug 1 mit großen Abmessungen, beispielsweise einen Lastkraftwagen, hinter dem ein Personenkraftwagen 2 auf einer Straße 3 fährt. Wegen der Größe bzw. der Höhe des Lastkraftwagens 1 hat der Fahrer des Personenkraftwagens 2 nur eine beschränkte Sicht. Auf dem Lastkraftwagen 1 ist eine nach vom blickende Videokamera 4 installiert, die ein Bild der Straße und der Verkehrssituation vor dem Lastkraftwagen aufnimmt. Die damit gewonnen Bilddaten werden - wie im Zusammenhang mit Fig. 2 später erläutert wird - über eine Antenne 5 ausgesendet.

Der Personenkraftwagen 2 ist ebenfalls mit einer Antenne 6 und mit einer Empfangseinrichtung (Fig. 3) versehen. Außerdem befindet sich im Blickfeld des Fahrers ein Bildschirm 7, auf dem das von der Videokamera 4 aufgenommene Bild wiedergegeben wird.

Fig. 2 zeigt eine erfindungsgemäße Vorrichtung im Lastkraftwagen 1 mit der Videokamera 4, einem Sender 8 mit der Antenne 5, einem Satellitenortungssystem 9, verschiedenen Sensoren 10 des Fahrzeugs und einem Rechner 11. Im Rechner 11 werden die gegebenenfalls bereits in der Videokamera digitalisierten Bildsignale zu Bilddaten codiert, die zum Senden geeignet sind. Ferner werden die von den Sensoren 10 und dem Satellitenortungssystem 9, beispielsweise GPS, erhaltenen Daten zu Selektionsdaten zusammengefiigt, die den Bilddaten zugeordnet sind und zur Selektion in Empfängern bestimmt sind. Die Selektionsdaten enthalten im Wesentlichen die Position, die Fahrtrichtung und eine Identifikation des sendenden Fahrzeugs.

Die Vorrichtung im Personenkraftwagen 2 nach Fig. 3 enthält einen Empfänger 12 mit der Antenne 6 und einen Bildschirm 7. Ein Rechner 13 erhält außer den empfangenen Daten Daten von einem Satellitenortungssystem 14 und Daten von verschiedenen Sensoren im Personenkraftwagen. So können beispielsweise Auffahr-Warneinrichtungen, die Bestimmung, ob der Lastkraftwagen 1 relativ nahe vor dem Personenkraftwagen 2 fährt, überprüft werden. Der Rechner 13 dient zur Selektion der empfangenen Daten und leitet diejenigen Bilddaten, die von einem vorausfahrenden Fahrzeug stammen, an den Bildschirm 7 weiter.

Auch wenn die Fahrer von Lastkraftwagen im Allgemeinen einen besseren Überblick haben, kann es zweckmäßig sein, auch solche Fahrzeuge mit Empfangseinrichtungen und Wiedergabeeinrichtungen auszurüsten. Eine Kombination der Einrichtungen gemäß den Figuren 2 und 3 ist in Fig. 4 dargestellt, wobei der Rechner 16 zu einer Einheit zusammengefasst ist und nur jeweils ein Satellitenortungssystem 17 und ein Satz Sensoren 18 erforderlich sind. Auch die Antennen 5, 6 können in bekannter Weise zu einer Antenne zusammengefasst werden.

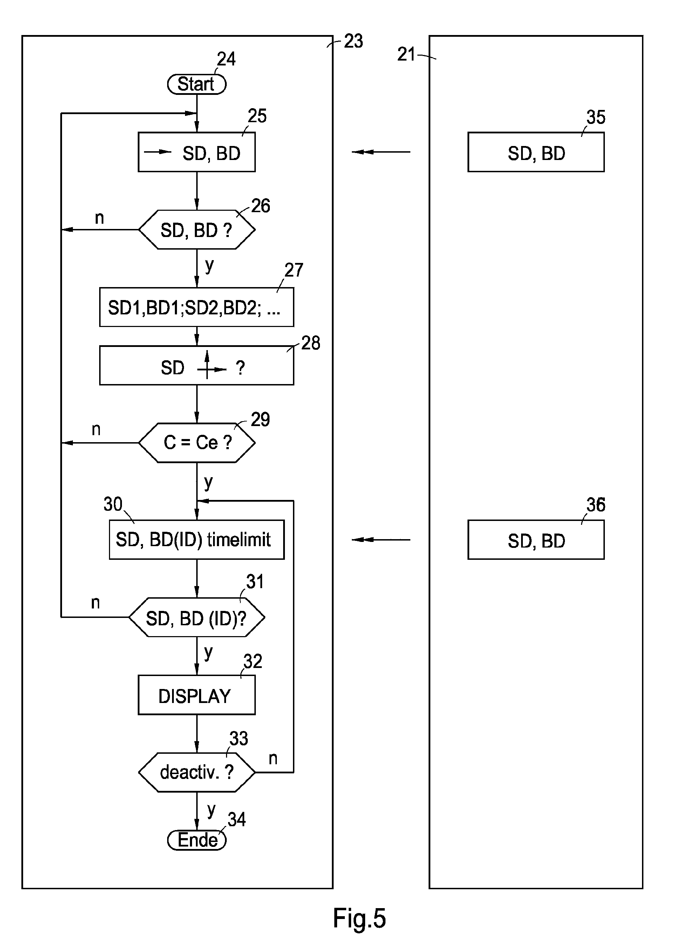

Fig. 5 zeigt ein Flussdiagramm des Ausführungsbeispiels des erfindungsgemäßen Verfahrens, das als Programm im jeweiligen Rechner abgelegt ist. Dabei stellt die linke Seite des Diagramms das Programm 23 im Rechner 13 (Fig. 3) und rechts das Programm 21 im Rechner 11 (Fig. 2) dar. In beiden Fällen sind nur die wesentlichen Verfahrensschritte dargestellt, soweit sie für das Verständnis der Erfindung erforderlich sind. Der Fachmann ist in der Lage, einzelne Routinen, beispielsweise die Bildung der entsprechenden Datenblöcke, die Zuordnung von Bild zu Selektionsdaten und andere Aufgaben im Einzelnen, durch Programme zu realisieren.

Die Selektionsdaten können im unmittelbaren zeitlichen Zusammenhang mit den Bilddaten gesendet werden, beispielsweise als sogenannter Header den Bilddaten vorangestellt werden. Es ist jedoch auch möglich, die Bilddaten relativ unabhängig von den Selektionsdaten zu senden, beispielsweise mit einer anderen Trägerfrequenz oder in einem anderen Zeitschlitz. Für diesen Fall können die Selektionsdaten und gegebenenfalls auch die Bilddaten mit entsprechenden Zeigern auf die jeweils anderen Daten versehen werden. Der Einfachheit halber werden die Selektionsdaten unabhängig davon im Folgenden auch als Header bezeichnet.

Nach einem Start bei 24 wird bei 25 der Empfänger daraufhin abgefragt, ob Selektionsdaten SD (Header) und Bilddaten BD eingetroffen sind. Danach verzweigt sich bei 26 das Programm in Abhängigkeit davon, ob Daten empfangen wurden. Ist dies nicht der Fall, wird die Abfrage 25 wiederholt bis Daten empfangen wurden. Diese werden bei 27 aufgrund der Informationen in den Selektionsdaten derart geordnet, dass derjenige empfangene Header, für den die Position die nächste Position zur Position des eigenen Fahrzeugs ist, in die erste Stelle der Liste aufgenommen wird.

Danach werden bei 28 die geordneten Header bezüglich der Fahrtrichtung Ce des eigenen Fahrzeugs überprüft. Bei 29 wird entschieden, ob in einer vorgegebenen Entfernung ein Fahrzeug mit gleicher Fahrtrichtung C vorhanden ist. Ist dies nicht der Fall, wird wieder bei 25 abgefragt, ob Selektionsdaten und Bilddaten empfangen wurden. Ist jedoch ein Fahrzeug mit gleicher Fahrtrichtung innerhalb der definierten Entfernung vorhanden, wird bei 30 der Empfang von Selektionsdaten und Bilddaten mit einer Identifikation ID, die in dem bei 27 bis 29 ausgewählten Header vorhanden ist, auf einen bestimmten Zeitbereich begrenzt.

Danach wird bei 31 geprüft, ob unter dieser Identifikation ID Daten empfangen wurden und ob die Kriterien in Bezug auf Position und Fahrtrichtung noch erfüllt sind. Ist dies nicht (mehr) der Fall, erfolgt wieder eine Abfrage des Empfängers. Ist dies jedoch der Fall, werden bei 32 die Bilddaten zur Anzeige gebracht, worauf eine Abfrage 33 erfolgt, ob eine Deaktivierung durch den Fahrer vorgenommen wurde. Nicht zutreffendenfalls wird das Programm bei 30 fortgesetzt. Zutreffendenfalls wird das Programm bei 34 beendet.

Von dem Rechner des vorausfahrenden Fahrzeugs werden lediglich fortlaufend Selektionsdaten und Bilddaten gesendet, was mit den beiden Programmpunkten 35, 36 dargestellt ist. Die Übertragung zum Empfänger des nachfolgenden Fahrzeugs ist durch Pfeile gekennzeichnet.

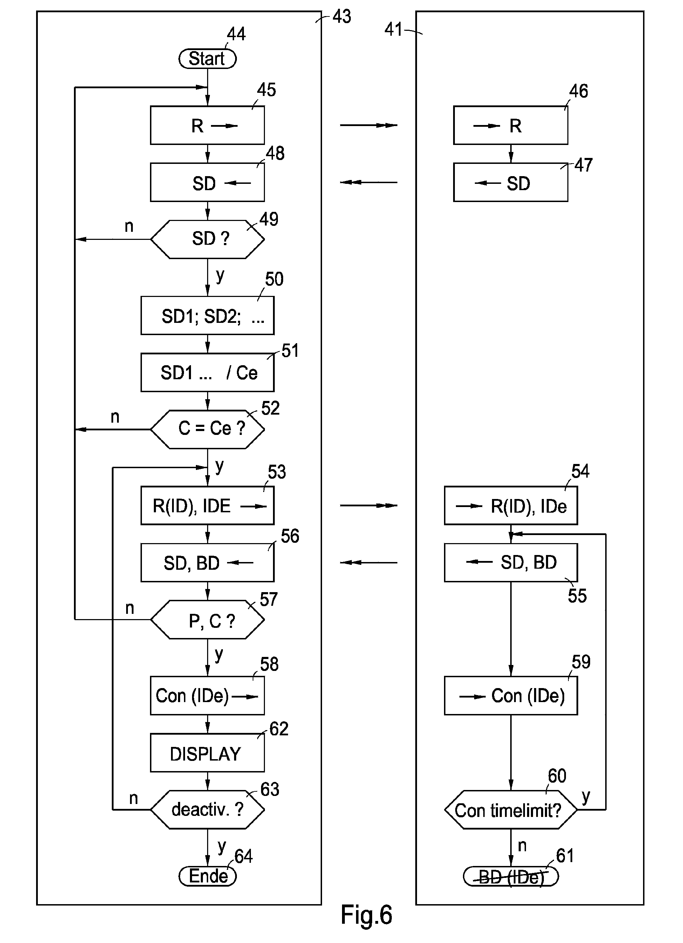

Bei dem Ausführungsbeispiel nach Fig. 6 werden vom vorausfahrenden Fahrzeug nicht fortlaufend Daten gesendet, sondern nur auf Anfrage. Die dazu dienenden Programme 43 und 41 werden im folgenden beschrieben. Nach einer Aktivierung des Systems durch den Fahrer des nachfolgenden Fahrzeugs wird das Programm bei 44 gestartet. Daraufhin wird bei 45 eine Anfrage R nach Selektionsdaten gesendet, die gegebenenfalls von vielen anderen Fahrzeugen empfangen wird, unter anderem auch von dem vorausfahrenden Fahrzeug bei 46. Darauf sendet das vorausfahrende Fahrzeug bei 47 einen Header SD, der vom nachfolgenden Fahrzeug bei 48 gegebenenfalls zusammen mit anderen auf die Anfrage gesendeten Headern empfangen wird.

Bei 49 verzweigt sich das Programm in Abhängigkeit davon, ob Header empfangen wurden. Ist dies nicht der Fall, wird wieder eine Anfrage gesendet. Zutreffendenfalls werden bei 50 die Header in Bezug auf die Position des eigenen Fahrzeugs geordnet, wobei der Header SD1 mit der nächsten Position als erster auf der Liste angeordnet wird. Bei 51 werden die geordneten Header in Bezug auf die eigene Fahrtrichtung Ce überprüft und bei 52 festgestellt, ob innerhalb einer defmierten Entfernung ein Fahrzeug mit gleicher Fahrtrichtung vorhanden ist. Ist dies der Fall, wird bei 53 eine Anfrage an das Fahrzeug mit der in dem bei 50 bis 52 selektierten Header enthaltenen Identifikation gerichtet.

Dieser Anfrage wird die Identifikation IDe des eigenen Fahrzeugs angefügt. Bei 54 wird im vorausfahrenden Fahrzeug die Anfrage empfangen, worauf bei 55 der Header und die Bilddaten gesendet werden. Diese werden bei 56 im nachfolgenden Fahrzeug empfangen und anhand der Identifikation des vorausfahrenden Fahrzeugs identifiziert. Bei 57 wird geprüft, ob die Kriterien, Position P und Fahrtrichtung C noch erfüllt sind. Ist dies nicht der Fall, wird der ganze Vorgang abgebrochen und mit dem Senden einer Anfrage bei 45 neu gestartet. Sind die Kriterien jedoch noch erfüllt, wird bei 58 eine Empfangsbestätigung Con mit der eigenen Identifikation ID gesendet, die bei 59 von dem vorausfahrenden Fahrzeug empfangen wird.

Dort wird bei 60 abgefragt, ob die Empfangsbestätigung innerhalb der defmierten Zeit empfangen wurde. Ist dies der Fall, werden bei 55 wieder zusammen mit dem Header Bilddaten gesendet. Ist jedoch innerhalb der defmierten Zeit keine Empfangsbestätigung eingetroffen, so wird bei 61 Bilddatenübertragung in Bezug auf das nachfolgende Fahrzeug mit der betreffenden Identifikation IDe beendet. Wenn jedoch noch andere aktive Anfragen vorliegen, bei denen die nachfolgenden Fahrzeuge Empfangsbestätigungen senden, wird die Bildübertragung fortgesetzt. In dem nachfolgenden Fahrzeug werden bei 62 nach dem Senden der Empfangsbestätigung bei 58 die Bilddaten zur Anzeige gebracht. Solange keine Deaktivierung durch den Fahrer bei 63 erfolgt, werden die Schritte 53 bis 63 wiederholt. Anderenfalls wird bei 64 das Programm beendet.

## Patentansprüche

1. Verfahren zur Verbesserung der Sicht von Fahrern von Kraftfahrzeugen, die mit Empfangseinrichtungen und Wiedergabeeinrichtungen für Bilddaten versehen sind, wobei die von jeweils einem vorausfahrenden anderen Fahrzeug, das mit mindestens einer in Fahrtrichtung ausgerichteten Videokamera und einer Sendeeinrichtung für die von der mindestens einen Videokamera erzeugten Bilddaten ausgerüstet ist, von der Empfangseinrichtung und Wiedergabeeinrichtung empfangen und wiedergegeben werden.

2. Verfahren nach Anspruch 1, **dadurch gekennzeichnet, dass** von den Bilddaten, die mit einer Empfangseinrichtung empfangbar sind, diejenigen selektiert werden, die von einem innerhalb einer vorgegebenen Entfernung vorausfahrenden Fahrzeug gesendet werden.

3. Verfahren nach Anspruch 2, **dadurch gekennzeichnet, dass** Fahrzeuge, welche Bilddaten aussenden, zusätzlich zu Bilddaten Selektionsdaten senden, die Informationen über die Position und die Fahrtrichtung und eine Identifikation enthalten, dass in der Empfangseinrichtung die empfangenen Informationen über die Position und Fahrtrichtung mit der eigenen Position und Fahrtrichtung verglichen werden und dass diejenigen Bildsignale empfangen werden, deren Daten bezüglich Position und Fahrtrichtung auf ein vorausfahrendes Fahrzeug hinweisen.

4. Verfahren nach einem der vorhergehenden Ansprüche, **dadurch gekennzeichnet, dass** die anderen Fahrzeuge laufend Selektionsdaten und Bilddaten senden.

5. Verfahren nach einem der Ansprüche 1 bis 3, **dadurch gekennzeichnet, dass** Fahrzeuge laufend Anfragen nach Selektionsdaten senden, dass die auf Anfrage empfangenen Selektionsdaten bezüglich Position und Fahrtrichtung mit den Daten des jeweils eigenen Fahrzeugs verglichen werden und dass dasjenige Fahrzeug zum Senden der Bilddaten aufgefordert wird, für welches die empfangenen Selektionsdaten bezüglich der Position und der Fahrtrichtung auf ein vorausfahrendes Fahrzeug hinweisen.

6. Verfahren nach Anspruch 5, **dadurch gekennzeichnet, dass** die Bilddaten ferner die jeweilige Identifikation enthalten.

7. Vorrichtung zur Verbesserung der Sicht von Fahrern von Kraftfahrzeugen, wobei die Fahrzeuge (1, 2) mit Empfangseinrichtungen (6, 12, 13) und Wiedergabeeinrichtungen (7) versehen sind, welche Selektionsmittel (13) aufweisen, die empfangene Signale derart selektieren, dass die von jeweils einem vorausfahrenden anderen Fahrzeug (1), das mit mindestens einer in Fahrtrichtung ausgerichteten Videokamera (4) und einer Sendeeinrichtung (5, 8, 11) für die von der mindestens einen Videokamera (4) erzeugten Bilddaten ausgerüstet ist, von der Empfangseinrichtung (6, 12, 13) und Wiedergabeeinrichtung (7) empfangen und wiedergegeben werden.

8. Vorrichtung nach Anspruch 7, **dadurch gekennzeichnet, dass** die Selektionsmittel (13) ferner derart selektieren, dass von den Bilddaten, die mit einer Empfangseinrichtung (6, 12) empfangbar sind, diejenigen selektiert werden, die von einem innerhalb einer vorgegebenen Entfernung vorausfahrenden Fahrzeug (1) gesendet werden.

9. Vorrichtung nach einem der Ansprüche 7 oder 8, **dadurch gekennzeichnet, dass** in den Selektionsmitteln (13) die empfangenen Informationen über die Position und Fahrtrichtung mit der eigenen Position und Fahrtrichtung verglichen werden und dass diejenigen Bildsignale empfangen werden, deren Daten bezüglich Position und Fahrtrichtung auf ein vorausfahrendes Fahrzeug (1) hinweisen.

10. Vorrichtung nach einem der Ansprüche 7 oder 8, **dadurch gekennzeichnet, dass** Fahrzeuge (1), welche Bilddaten senden, mit einer Einrichtung zum Senden (5, 8, 11) von Selektionsdaten ausgerüstet sind, welche Informationen über die Position und die Fahrtrichtung und eine Identifikation enthalten.
